# EUROPÄISCHE PATENTSCHRIFT

(11) **EP 1 110 828 B1**
(45) Veröffentlichungstag und Bekanntmachung des Hinweises auf die Patenterteilung: **01.12.2004**
(21) Anmeldenummer: 00403192.8
(22) Anmeldetag: 16.11.2000
(51) Int. Cl.: B60R 25/02, E05B 65/12

(54) **Verriegelungsvorrichtung**
Locking device
Dispositif de verrouillage

(30) Priorität: 22.12.1999 DE 19961975
(43) Veröffentlichungstag der Anmeldung: 27.06.2001
(73) Patentinhaber: Valeo Sicherheitssysteme GmbH, 85253 Erdweg (DE)
(72) Erfinder: Starken, Harald, 85253 Walkertshofen (DE)
(74) Vertreter: Rosolen-Delarue, Katell

(56) Entgegenhaltungen:
- EP-A- 0 764 566

## Beschreibung

Die Erfindung betrifft eine Verriegelungsvorrichtung mit mindestens einem durch einen elektromechanischen Antrieb axial von einer Ver- in eine Entriegelungslage und umgekehrt verschiebbaren Sperrelement.

Derartige Vorrichtungen werden üblicherweise zur Ver- und Entriegelung der Lenkspindel einer Lenkeinrichtung eines Fahrzeuges, aber auch z.B. zur Ver- und Entriegelung von Türen o.dgl. verwendet.

Eine entsprechende Vorrichtung ist beispielsweise aus der DE 44 36 326 C1 bekannt. Diese bekannte Vorrichtung umfaßt ein durch den elektromechanischen Antrieb drehbares Steuerglied, welches zwei sich um die Drehachse des Steuergliedes erstreckende wendelförmige Schrägen aufweist, auf denen bei Drehung des Steuergliedes zwei in dem Sperrelement querverschiebbar angeordnete federbeaufschlagte Steuerbolzen entlanggleiten und dadurch das Sperrelement von seiner Ver- in seine Entriegelungsstellung verschieben. Im Bereich der beiden Enden der wendelförmigen Schrägen sind die Auflagen- und Innenwandbereiche des Steuergliedes derart ausgebildet, daß die federbeaufschlagten Steuerbolzen gegenüber dem Steuerglied in diesen Bereichen einen Freilauf ausführen, sofern sich das Steuerglied nach Erreichen der Ver- bzw. Entriegelungslage des Sperrelementes in die entsprechende Richtung noch weiterdreht. Das Sperrelement ist in seiner Entriegelungsstellung in axialer Richtung durch eine Druckfeder beaufschlagt, die dafür sorgt, daß die beiden Steuerbolzen in die Schrägen gedrückt werden, wenn das Steuerglied sich in der zur Freilauf-Drehrichtung entgegengesetzten Richtung bewegt und das Sperrelement somit in seine Verriegelungslage verschoben werden soll.

Nachteilig ist bei dieser bekannten Vorrichtung unter anderem, daß sie aufgrund der beiden durch die Feder beabstandeten Steuerbolzen relativ platzaufwendig ist. Außerdem besitzt die bekannte Steuerbolzenanordnung relativ große Reibungsradien, so daß die resultierende Kraft am Sperrelement gering ist.

Ausgehend von der DE 44 36 326 C1 liegt der Erfindung die Aufgabe zugrunde, eine Verriegelungsvorrichtung mit einfacherer Steuerbolzenanordnung anzugeben.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, in dem Sperrelement nur einen einzigen Steuerbolzen querverschiebbar anzuordnen, dessen jeweilige axiale Lage durch die Kontur der Innenwand des Steuergliedes bestimmt wird. Zur Verschiebung des Sperrelementes greift das erste Ende des Steuerbolzens in den Gewindegang eines in dem Steuerglied angeordneten Gewindes ein, während das zweite Ende sich an der dem Gewinde gegenüberliegenden Innenwand des Steuergliedes abstützt. Im Bereich der Gewindeenden gelangt der Steuerbolzen auf Auflageflächen und wird durch die entsprechend ausgestaltete Innenwand des Steuergliedes derart zwangsgesteuert, daß das Steuerglied relativ zu dem axial federbeaufschlagten Sperrelement einen Freilauf ausführt, sofern sich das Steuerglied nach Erreichen der Ver- bzw. Entriegelungslage des Sperrelementes in die entsprechende Richtung noch weiterdreht.

Bei einer vorteilhaften Ausführungsform der Erfindung umfaßt das Steuerglied ein durch den elektromechanischen Antrieb drehbares Antriebselement und ein mit dem Antriebselement drehfest verbundenes und das Gewinde enthaltendes Betätigungselement, wobei das Betätigungselement innerhalb des Steuergliedes angeordnet und axial gegenüber dem Betätigungselement verschiebbar ist. Auf seiner dem Sperrelement abgewandten Seite weist das Betätigungselement einen axial verschiebbaren Deckel auf, an dem sich eine zwischen Betätigungselement und Antriebselement angeordnete Druckfeder abstützt. Die Länge des Gewindes ist derart gewählt, daß nach Erreichen der Verriegelungs- bzw. Entriegelungslage des Sperrelementes der Steuerbolzen sich noch innerhalb des Gewindes befindet, so daß beim Weiterdrehen des Betätigungselementes bei in der Verriegelungslage befindlichem Sperrelementes das Betätigungselement sich in Richtung auf die Druckfeder verschiebt und diese vorspannt, und daß beim Weiterdrehen des Betätigungselementes bei in der Entriegelungslage befindlichem Sperrelementes die Druckfeder durch das den Dekkel in Federrichtung verschiebende Sperrelement vorgespannt wird.

Durch diese Ausführungsform ergibt sich einerseits der Vorteil, daß auch bei der Verwendung des zwangsgesteuerten Steuerbolzens nur eine einzige Druckfeder erforderlich ist. Andererseits übernimmt diese Druckfeder gleichzeitig die sogenannte "ready to lock"-Funktion des Sperrelementes. Trifft nämlich das jeweilige Sperrelement bei seiner Bewegung in die Verriegelungslage -je nach Stellung der Lenkspindel- nicht in eine z.B. durch zwei Zähne eines Zahnkranzes gebildete Sperrnut, sondern auf die Spitze eines der Zähne, so käme es zu keiner Verriegelung der Lenkspindel, wenn in dieser Lage des Sperrelementes die elektrische Stromversorgung des elektromechanischen Antriebes abgeschaltet wird. Auch bei einer nachträglichen Drehung des Lenkrades würde der Steuerbolzen nicht in die Sperrnut gedrückt werden, weil das Sperrelement eine derartige Verschiebung behindern würde. Es ist daher üblich (und wäre z.B. auch im Falle der der DE 44 36 326 C1 erforderlich), das Sperrelement in seinem der jeweiligen Lenkspindel zugewandten Bereich zweiteilig auszubilden und die beiden Teile durch eine Feder miteinander zu koppeln. Wenn in diesem Fall das vordere Teil des Sperrelementes auf eine Zahnspitze trifft, wird durch die weitere Verschiebung des hinteren Teiles die "ready to lock"-Feder vorgespannt, so daß bei einem späteren Drehen der Lenkspindel der vordere Teil des Sperrelementes in die Sperrnut eingeschoben wird.

Bei der vorstehend beschriebenen vorteilhaften Ausführungsform der Erfindung übernimmt nun die ohnehin für die Abstützung des Sperrelementes erforderliche Druckfeder auch die Funktion der "ready to lock"-Feder, da beim Auftreffen des Sperrelementes auf eine Zahnspitze das Betätigungselement zur Druckfeder hin verschoben wird und diese vorspannt. Nach Verdrehen der Lenkspindel verschiebt dann die Druckfeder sowohl das Betätigungselement als auch das mit diesem Element verbundene Sperrelement in Richtung auf die Sperrnut.

Weitere Einzelheiten und Vorteile der Erfindung ergeben sich aus den folgenden anhand von Figuren erläuterten Ausführungsbeispielen. Es zeigen:
Fig. 1 den Längsschnitt durch eine erfindungsgemäße Vorrichtung mit einem Sperrelement, wobei sich das Sperrelement in seiner Verriegelungslage befindet;
Fig.2 einen Längsschnitt durch ein das Sperrelement betätigendes Betätigungselement;
Fig.3 eine Seitenansicht auf das in Fig.2 dargestellte Betätigungselement von der mit III bezeichneten Seite und
Fig.4-6 drei weitere Fig.3 entsprechende Seitenansichten bei unterschiedlichen Drehwinkeln des Betätigungselementes.

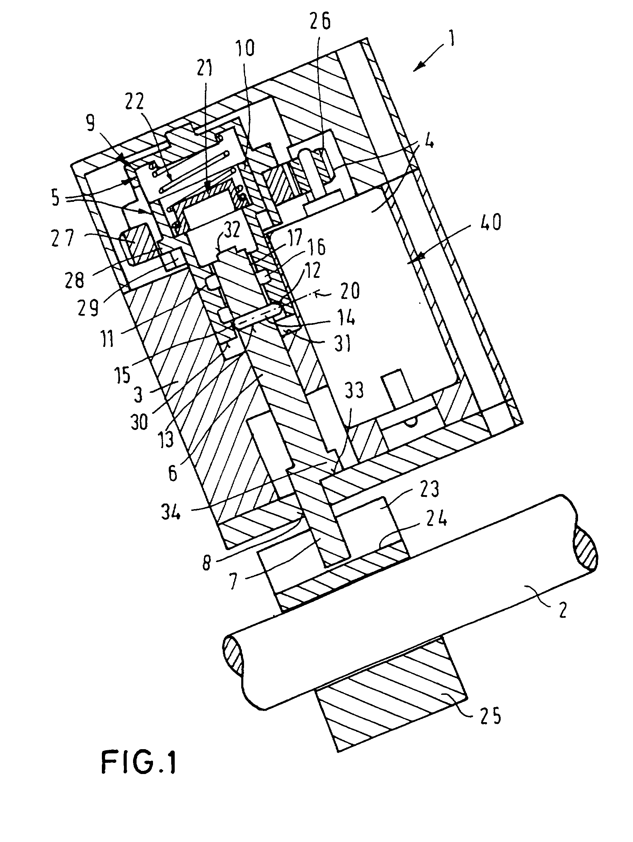

In Fig. 1 ist mit 1 eine Verriegelungsvorrichtung zur Verriegelung der Lenkspindel 2 einer Lenkeinrichtung eines Kraftfahrzeuges bezeichnet. Die Verriegelungsvorrichtung 1 umfaßt ein Gehäuse 3, in dem ein elektromechanischer Antrieb 4 mit einem Elektromotor 40 mit umkehrbarer Drehrichtung angeordnet ist, der über ein Steuerglied 5 eine axiale Verschiebung eines von einer Ver- in eine Entriegelungslage und umgekehrt verschiebbaren Sperrelementes 6 bewirkt. Das Sperrelement 6 weist in seinem der Lenkspindel 2 zugewandten Bereich 7 einen rechteckförmigen Querschnitt auf und wird durch eine rechteckförmige Ausnehmung 8 des Gehäuses 3 geführt, so daß eine Drehung des Sperrelementes 6 um seine Längsachse nicht möglich ist.

Das Steuerglied 5 besteht aus einem Antriebselement 9 und einem mit diesem drehfest verbundenen Betätigungselement 10, welches innerhalb des Antriebselementes 9 angeordnet und gegenüber diesem axial verschiebbar ist. Das Betätigungselement 10 weist auf seiner dem Sperrelement 6 zugewandten Seite ein Gewinde 11 auf, in welches das erste Ende 12 eines in einer Querbohrung 13 des Sperrelementes 6 verschiebbar angeordneten Steuerbolzens 14 eingreift, dessen zweites Ende 15 radial durch die dem Gewindegang 16 gegenüberliegende Innenwand 17 des Betätigungselementes 10 zwangsgeführt wird.

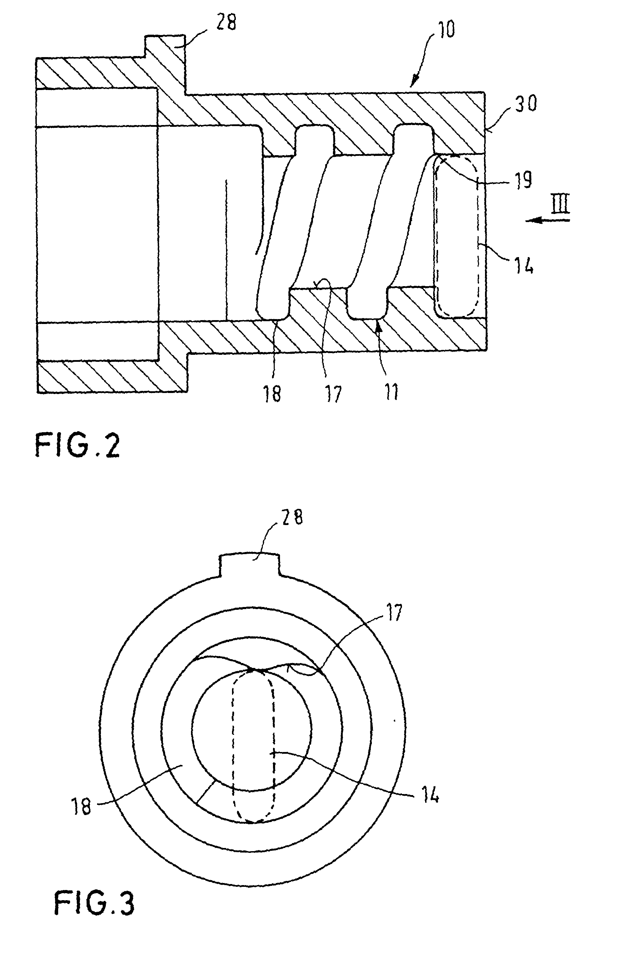

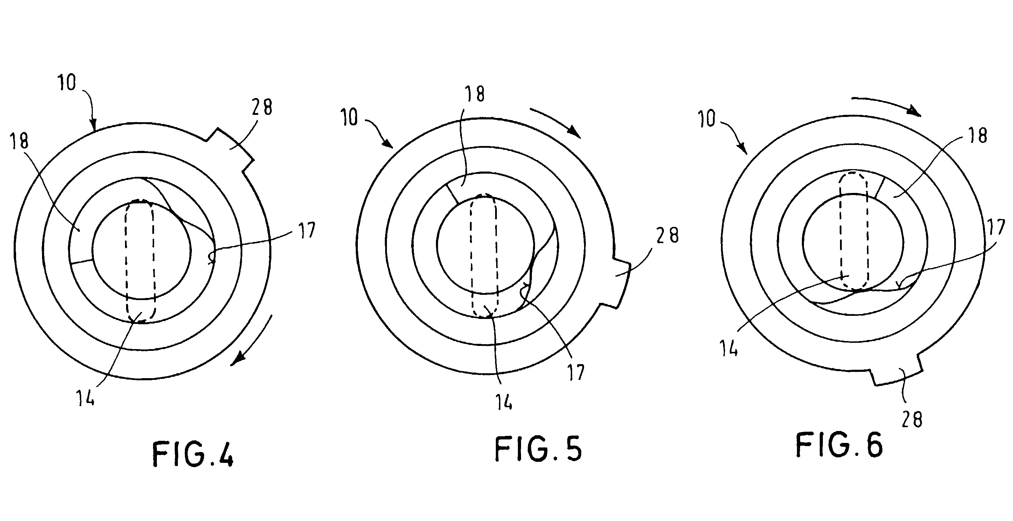

Die Innenwand 17 des Betätigungselementes 10 weist im Bereich der beiden Gewindeenden 18, 19 (Fig.2) eine Kontur auf (Fig.3), die derart ausgebildet ist, daß der durch die Innenwand 17 zwangsgeführte Steuerbolzen 14 in diesen Bereichen einen Freilauf ausführt, sofern sich das Betätigungselement 10 nach Erreichen der Ver- bzw. Entriegelungslage des Sperrelementes in die entsprechende Richtung noch weiterdreht. Dabei wird der Steuerbolzen 14 in Richtung seiner Längsachse 20 hin- und herverschoben (vgl. auch Fig.3-6; der Steuerbolzen 14 ist in diesen Fig. gestrichelt dargestellt).

Das Betätigungselement 10 weist auf seiner der Lenkspindel 2 abgewandten Seite einen axial verschiebbaren Deckel 21 (Fig. 1) auf, an dem sich eine zwischen Betätigungselement 10 und Antriebselement 9 angeordnete Druckfeder 22 abstützt.

Die Länge des Gewindes 11 ist derart gewählt, daß nach Erreichen der Verriegelungslage des Sperrelementes 6 der Steuerbolzen 14 sich noch innerhalb des Gewindes 11 befindet und das Betätigungselement 10 bzw. das Sperrelement 6 auch nach dem Erreichen der Verriegelungslage axial zur Erzeugung einer Vorspannung der Druckfeder 22 weiterverschoben werden kann.

Wird das Sperrelement 6 hingegen in die Entriegelungslage verschoben, so wird der Dekkel 21 durch das Sperrelement 6 gegen die Druckfeder 22 verschoben, derart, daß bei Erreichen der Entriegelungslage die Druckfeder vorgespannt ist.

Nachfolgend wird auf die Wirkungsweise der erfindungsgemäßen Verriegelungsvorrichtung 1 eingegangen. Dabei möge sich das Sperrelement 6 in der in Fig. 1 dargestellten Verriegelungslage befinden, so daß sein vorderes Ende 7 in eine durch zwei benachbarte Zähne 23 gebildeten Sperrnut 24 eines an der Lenkspindel 2 befestigten Zahnkranzes 25 eingreift und das Betätigungselement 10 in Richtung auf die Druckfeder 22 verschoben ist und daher die Feder vorspannt.

Wird nun der Elektromotor 40 aktiviert, um das Sperrelement 6 in seine Entriegelungslage zu verschieben, so dreht der Elektromotor 40 über ein Antriebsritzel 26 das Antriebselement 9, welches hierzu umfangseitig eine Außenverzahnung 27 aufweist. Die Drehbewegung des Antriebselementes 9 wird über einen an dem Betätigungselement 10 angeordneten Vorsprung 28, der in eine entsprechende axiale Längsnut 29 des Antriebselementes 9 eingreift, auf das Betätigungselement 10 übertragen. Dadurch wird das Betätigungselement 10 so lange schraubenförmig entlang des Sperrelementes 6 verschoben, bis es mit seiner vorderen Stirnseite 30 gegen einen gehäusefesten ersten Anschlag 31 stößt.

Bei einer weiteren Drehung des Betätigungselementes 10, bei der es sich nicht mehr in Richtung auf die Lenkspindel 2 verschieben kann, wird das Sperrelement 6 aus der Sperrnut 24 des Zahnkranzes 25 herausgezogen. Dabei stößt das der Lenkspindel 2 abgewandte Ende 32 des Sperrelementes 6 gegen den Deckel 21, verschiebt diesen und spannt dadurch die Druckfeder 22 so lange vor, bis der Steuerbolzen 14 das Gewindeende 18 erreicht hat und das Betätigungselement 10 nun eine Freilaufbewegung ausführt. Das Sperrelement 6 hat seine Entriegelungsstellung erreicht und der Elektromotor 40 kann z.B. über einen aus Übersichtlichkeitsgründen nicht dargestellten Berührungsschalter abgeschaltet werden.

Zur Verriegelung der Lenkspindel 2 wird der Elektromotor 40 wiederum aktiviert, wobei das Antriebsritzel 26 und somit auch das Steuerglied 5 in die entgegengesetzte Richtung gedreht werden. Durch den Druck der vorgespannten Druckfeder 22 wird der Steuerbolzen 14 in das Gewinde 11 des sich drehenden Betätigungselementes 10 hineingedrückt, so daß das Sperrelement 6 in seine verriegelte Lage verschoben wird. Dabei befindet sich das Betätigungselement 10 zunächst noch an dem ersten Anschlag 31. Erreicht nun ein vorderer Vorsprung 34 des Sperrelementes 6 einen gehäusefesten zweiten Anschlag 33 (oder drückt das Sperrelement gegen den Nutengrund der Sperrnut 24) und kann daher nicht mehr in Verriegelungsrichtung verschoben werden, so wird das Betätigungselement 10 so lange in Richtung auf die Druckfeder 22 verschoben, bis der Steuerbolzen 14 das Gewindeende 18 (Fig.2) erreicht hat und das Betätigungselement 10 wiederum einen Freilauf ausführt (der Bewegungsablauf des Steuerbolzens entspricht dem in den Fig.3-6 dargestellten Ablauf). Anschließend wird dann der Elektromotor z.B. durch einen weiteren nicht dargestellten Berührungsschalter abgeschaltet.

### Bezugszeichenliste

- 1: Verriegelungsvorrichtung
- 2: Lenkspindel
- 3: Gehäuse
- 4: elektromechanischer Antrieb, Antrieb
- 40: Elektromotor
- 5: Steuerglied
- 6: Sperrelement
- 7: Bereich, vorderes Ende (Sperrelement)
- 8: Ausnehmung (Gehäuse)
- 9: Antriebselement
- 10: Betätigungselement
- 11: Gewinde
- 12: erste Ende (Steuerbolzen)
- 13: Querbohrung
- 14: Steuerbolzen
- 15: zweite Ende (Steuerbolzen)
- 16: Gewindegang
- 17: Innenwand
- 18, 19: Gewindeenden
- 20: Längsachse
- 21: Deckel
- 22: Druckfeder
- 23: Zahn
- 24: Sperrnut
- 25: Zahnkranz
- 26: Antriebsritzel
- 27: Außenverzahnung
- 28: Vorsprung
- 29: Längsnut
- 30: Stirnseite
- 31: erste Anschlag
- 32: Ende (Sperrelement)
- 33: zweite Anschlag
- 34: Vorsprung (Sperrelement)

## Patentansprüche

1. Verriegelungsvorrichtung mit mindestens einem durch einen elektromechanischen Antrieb (4) axial von einer Ver- in eine Entriegelungslage und umgekehrt verschiebbaren Sperrelement (6), mit den Merkmalen:
a) die Verriegelungsvorrichtung (1) umfaßt ein durch den elektromechanischen Antrieb (4) drehbares Steuerglied (5), welches auf seiner dem Sperrelement (6) zugewandten Seite ein Gewinde (11) aufweist, in welches das erste Ende (12) eines in dem Sperrelement (6) querverschiebbar angeordneten Steuerbolzens (14) eingreift, dessen zweites Ende (15) radial durch die dem jeweiligen Gewindegang (16) gegenüberliegende Innenwand (17) des Steuergliedes (5) zwangsgeführt wird;
b) die Innenwand (17) des Steuergliedes (5) ist im Bereich der beiden Gewindeenden (18,19) derart ausgebildet, daß der durch die Innenwand (17) zwangsgeführte Steuerbolzen (14) gegenüber dem Steuerglied (5) in diesen Bereichen einen Freilauf ausführt, sofern sich das Steuerglied (5) nach Erreichen der Ver- bzw. Entriegelungslage des Sperrelementes (6) in die entsprechende Richtung noch weiterdreht;
c) das Sperrelement (6) ist sowohl in seiner Verriegelungsstellung als auch in der Entriegelungsstellung in axialer Richtung federbeaufschlagt, derart, daß bei einer der Freilauf-Drehrichtung entgegengesetzten Drehrichtung des Steuergliedes (5) der Steuerbolzen (14) axial in das Gewinde (11) gedrückt wird.

2. Verriegelungsvorrichtung nach Anspruch 1, **dadurch gekennzeichnet,**
**daß** das Steuerglied (5) ein durch den elektromechanischen Antrieb (4) drehbares Antriebselement (9) und ein mit dem Antriebselement (9) drehfest verbundenes und das Gewinde (11) enthaltendes Betätigungselement (10) umfaßt, wobei das Betätigungselement (10) innerhalb des Antriebselementes (9) angeordnet und axial gegenüber diesem verschiebbar ist;
**daß** das Betätigungselement (10) auf seiner dem Sperrelement (6) abgewandten Seite einen axial verschiebbaren Deckel (21) aufweist, an dem sich eine Druckfeder (22) abstützt, deren anderes Ende sich an dem Antriebselement (9) abstützt;
**daß** die Länge des Gewindes (11) derart gewählt ist, daß nach Erreichen der Verriegelungslage des Sperrelementes (6) der Steuerbolzen (14) sich noch innerhalb des Gewindes (11) befindet, so daß beim Weiterdrehen des Betätigungselementes (10) bei in der Verriegelungslage befindlichem Sperrelementes (6) das Betätigungselement (10) sich in Richtung auf die Druckfeder (22) verschiebt und diese vorspannt.

3. Verriegelungsvorrichtung nach Anspruch 1 oder 2, **dadurch gekennzeichnet, daß** bei der Bewegung des Sperrelementes (6) in die Entriegelungslage der Deckel (21) durch das Sperrelement (6) gegen den Druck der Druckfeder (22) verschoben wird, derart, daß bei Erreichen der Entriegelungslage die Druckfeder (22) vorgespannt ist.

4. Verriegelungsvorrichtung nach einem der Ansprüche 1 bis 3, **dadurch gekennzeichnet, daß** das Sperrelement (6) einen vorderen Vorsprung (34) aufweist, der bei Erreichen der Verriegelungsstellung des Sperrelementes (6) gegen einen Anschlag (33) eines die Vorrichtung mindestens teilweise umschließenden Gehäuses (3) gedrückt wird.

5. Verriegelungsvorrichtung nach einem der Ansprüche 1 bis 4, **dadurch gekennzeichnet, daß** der elektromechanische Antrieb (4) einen Elektromotor (40) mit umkehrbarer Drehrichtung umfaßt.

6. Verriegelungsvorrichtung nach einem der Ansprüche 1 bis 5, **dadurch gekennzeichnet, daß** der elektromechanische Antrieb (4) ein Antriebsritzel (26) umfaßt, welches in eine Außenverzahnung (27) des Steuergliedes (5) eingreift.

## Claims

1. Locking device having at least one catch element (6) that can be axially displaced from a locking to an unlocking position and vice-versa by an electromechanical drive (4), having the following features:
a) the locking device (1) comprises a control element (5), which can be rotated by the electromechanical drive (4) and which on its side facing the catch element (6) has a thread (11), in which the first end (12) of a pilot bolt (14) transversely displaceable in the catch element (6) engages, the second end (15) of the bolt being radially positively guided by the inside wall (17) of the control element (5) opposite the respective thread (16);
b) in the area of the two threaded ends (18, 19) the inside wall (17) of the control element (5) is formed in such a way that the pilot bolt (14), positively guided by the inside wall (17), in this area runs freely in relation to the control element (5), provided that the control element (5), on attaining the locking or unlocking position of the catch element (6), still continues to turn in the corresponding direction;
c) the catch element (6) is axially sprung both in its locking position and in the unlocking position, in such a way that in a direction of rotation of the control element (5) counter to the free-running direction of rotation the pilot bolt (14) is forced axially into the thread (11).

2. Locking device according to Claim 1, **characterized in that**
the control element (5) comprises a drive element (9), which can be turned by the electromechanical drive (4), and an actuating element (10), rotationally locked to the drive element (9) and containing the thread (11), the actuating element (10) being arranged inside the drive element (9) and being axially displaceable in relation to the latter;
on its side remote from the catch element (6) the actuating element (10) has an axially displaceable cover (21), on which rests a compression spring (22), the other end of which rests on the drive element (9);
the length of the thread (11) is selected in such a way that on reaching the locking position of the catch element (6) the pilot bolt (14) is still situated inside the thread (11), so that as the actuating element (10) is turned further with the catch element (6) situated in the locking position the actuating element (10) shifts towards the compression spring (22), preloading the latter.

3. Locking device according to Claim 1 or 2, **characterized in that** as the catch element (6) moves into the unlocking position, the cover (21) is displaced by the catch element (6) against the pressure of the compression spring (22) in such a way that on reaching the unlocking position the compression spring (22) is preloaded.

4. Locking device according to any one of Claims 1 to 3, **characterized in that** the catch element (6) has a front projection (34), which on attainment of the locking position of the catch element (6) is pressed against a stop (33) of a housing (3) at least partially enclosing the device.

5. Locking device according to any one of Claims 1 to 4, **characterized in that** the electromechanical drive (4) comprises an electric motor (40) with reversible direction of rotation.

6. Locking device according to any one of Claims 1 to 5, **characterized in that** the electromechanical drive (4) comprises a drive pinion (26), which meshes in an external toothing (27) of the control element (5).

## Revendications

1. Dispositif de verrouillage comportant au moins un élément de verrouillage (6) déplaçable axialement par un dispositif d'entraînement électromécanique (4) d'une position de verrouillage à une position de déverrouillage et vice-versa, **caractérisé en ce que**
a) le dispositif de verrouillage (1) comprend un organe de commande (5) déplaçable en rotation par le dispositif d'entraînement électromécanique (4) et présentant, sur sa face tournée vers l'élément de verrouillage (6), un filetage (11) dans lequel s'engage la première extrémité (12) d'un axe de commande (14) déplaçable transversalement dans l'élément de verrouillage (6) et dont la deuxième extrémité (15) est soumise à un guidage forcé dans le sens radial par la paroi intérieure (17) de l'organe de commande (5) opposée au filetage (16) respectif.
b) la paroi intérieure (17) de l'organe de commande (5) est conçue, dans la zone des deux extrémités de filetage (18, 19), de telle manière que l'axe de commande (14) soumis au guidage forcé par la paroi intérieure (17) par rapport à l'organe de commande (5) effectue une course à vide, dans la mesure où l'organe de commande (5) continue de tourner dans la direction correspondante, une fois que l'élément de verrouillage (6) a atteint la position de verrouillage ou de déverrouillage.
c) l'élément de verrouillage (6) est soumis à l'action d'un ressort dans le sens axial aussi bien dans sa position de verrouillage que dans sa position de déverrouillage, de manière que, dans le cas d'un sens de rotation de l'organe de commande (5) opposé au sens de rotation de course à vide, l'axe de commande (14) est poussé axialement dans le filetage (11 ).

2. Dispositif de verrouillage selon la revendication 1, **caractérisé en ce que**
l'organe de commande (5) comprend un élément d'entraînement (9) déplaçable en rotation par le dispositif d'entraînement électromécanique (4) et un élément d'actionnement (10) lié en rotation avec l'élément d'entraînement (9) et contenant le filetage (11), sachant que l'élément d'actionnement (10) est disposé à l'intérieur de l'élément d'entraînement (9) et se déplace axialement par rapport à celui-ci ;
l'élément d'actionnement (10) comporte, sur sa face opposée à l'élément de verrouillage (6), un couvercle (21) sur lequel prend appui un ressort de pression (22) dont l'autre extrémité prend appui sur l'élément d'entraînement (9) ;
la longueur du filetage (11) est choisie de telle manière que l'axe de commande (14) se trouve toujours à l'intérieur du filetage (11), après que l'élément de verrouillage (6) a atteint la position de verrouillage, de manière que lorsque l'élément d'actionnement (10), poursuit sa rotation pendant que l'élément de verrouillage (6) se trouve dans la position de verrouillage, l'élément d'actionnement (10) se déplace en direction du ressort de compression (22) et le soumet à une précontrainte.

3. Dispositif de verrouillage selon la revendication 1 ou 2, **caractérisé en ce que**, au cours du déplacement de l'élément de verrouillage (6) vers la position de déverrouillage, le couvercle (21) est déplacé par l'élément de verrouillage (6) à l'encontre de la pression exercée par le ressort de pression (22) de manière que celui-ci est précontraint au moment où la position de déverrouillage est atteinte.

4. Dispositif de verrouillage selon l'une des revendications 1 à 3, **caractérisé en ce que** l'élément de verrouillage (6) présente une saillie avant (34) qui, lorsque la position de verrouillage de l'élément de verrouillage (6) est atteinte, est poussée contre une butée (33) d'un boîtier (3) enfermant au moins partiellement le dispositif.

5. Dispositif de verrouillage selon l'une des revendications 1 à 4, **caractérisé en ce que** le dispositif d'entraînement électromécanique (4) comprend un moteur électrique (40) dont le sens de rotation peut être inversé.

6. Dispositif de verrouillage selon l'une des revendications 1 à 2, **caractérisé en ce que** le dispositif d'entraînement électromécanique (4) comprend un pignon d'entraînement (26) qui s'engage dans une denture extérieure (27) de l'organe de commande (5).
